# EUROPEAN PATENT APPLICATION

(11) **EP 4 817 413 A1**
(43) Date of publication of application: **07.10.2026**
(21) Application number: 24897207.7
(22) Date of filing: 01.11.2024
(51) Int. Cl.: A01K 89/017

(54) **REEL DEVICE**

(30) Priority: 30.11.2023 JP 2023202742
(71) Applicant: Sumitomo Heavy Industries, Ltd., Tokyo 141-6025 (JP)
(72) Inventor: YAMAMOTO, Taizo, Yokosuka-shi, Kanagawa 237-8555 (JP); MINARI, Takahiro, Yokosuka-shi, Kanagawa 237-8555 (JP)
(74) Representative: Louis Pöhlau Lohrentz
(86) International application number: PCT/JP2024/039046
(87) International publication number: WO 2025/115518

(57) **Abstract**

A reel device 1 includes a motor 7, a spool 6 that is rotatably supported and around which a fishing line is wound, and an electric shaft gear 8 that is capable of transmitting a rotation force generated by the motor 7 to the spool 6 by changing a speed through magnetic modulation.

## Description

### Technical Field

The present invention relates to a reel device capable of electric winding by a motor.

### Background Art

A conventional electric reel capable of electric winding by a motor is known as a reel device for winding a fishing line (for example, refer to PTL 1).

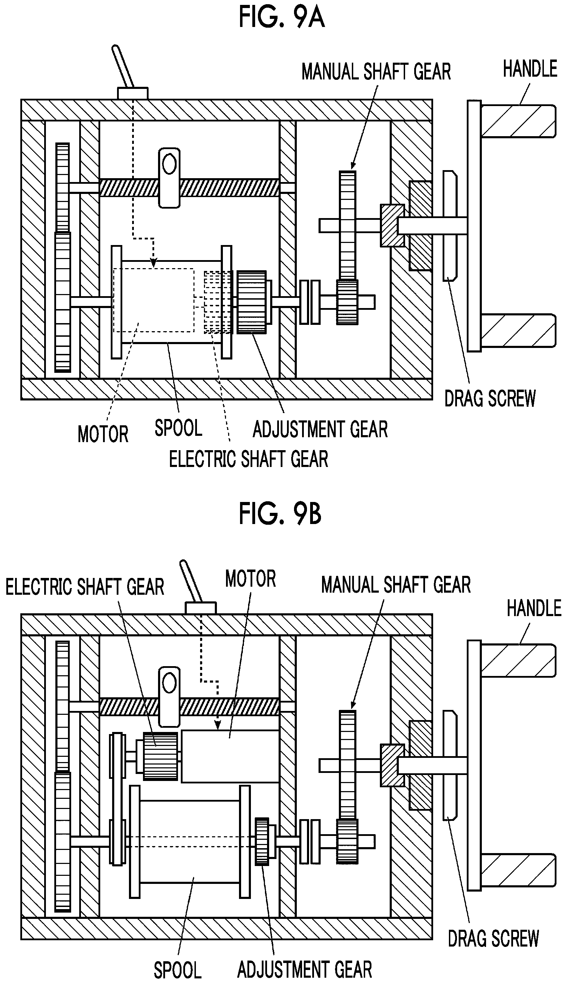

Structural examples of the conventional electric reel are shown in FIGS. 9A and 9B. As shown in these drawings, a general electric reel is configured to be capable of individually transmitting power to a spool for winding the fishing line via a manual shaft gear for changing a speed of a handle (manual) input and an electric shaft gear for changing a speed of a motor output. The manual shaft gear is a gear mechanism including externally meshing spur gears, and the electric shaft gear is a gear mechanism such as a planetary gear mechanism. A difference between rotation outputs of the manual shaft gear and the electric shaft gear is absorbed by an adjustment gear (differential gear).

### Citation List

### Patent Literature

[PTL 1] Japanese Unexamined Patent Publication No. 2023-131681

### Summary of Invention

### Technical Problem

The conventional electric reel has the following problems.
· Noise during the electric winding is large.
· The electric shaft gear is structurally complicated and maintenance is difficult.

The present invention has been made in view of the above circumstances, and an object of the present invention is to provide an electric reel having excellent quietness and excellent maintainability.

### Solution to Problem

According to the present invention, there is provided a reel device including: a motor; a line winding portion that is rotatably supported and around which a line-like body is wound; and a first speed change mechanism that is capable of transmitting a rotation force generated by the motor to the line winding portion by changing a speed through magnetic modulation.

### Advantageous Effects of Invention

According to the present invention, it is possible to provide the electric reel having excellent quietness and excellent maintainability.

### Brief Description of Drawings

FIG. 1 is a cross-sectional view schematically showing a reel device according to a first embodiment.
FIG. 2 is a cross-sectional view of a manual shaft gear (magnetic modulation gear) taken along line II-II of FIG. 1.
FIG. 3 is a cross-sectional view schematically showing a reel device according to a second embodiment.
FIG. 4 is a view showing a basic configuration and characteristics of each embodiment.
FIG. 5 is a cross-sectional view schematically showing a reel device according to a third embodiment.
FIG. 6 is a cross-sectional view schematically showing a reel device according to a fourth embodiment.
FIG. 7 is a cross-sectional view schematically showing a reel device according to a modification example of the fourth embodiment.
FIG. 8 is a cross-sectional view schematically showing a reel device according to a fifth embodiment.
FIG. 9A is a view showing a structural example of a conventional electric reel.
FIG. 9B is a view showing the structural example of the conventional electric reel.

### Description of Embodiments

Hereinafter, an embodiment of the present invention will be described in detail with reference to the drawings.

### <1. First Embodiment>

### [1-1 Entire Configuration of Reel Device]

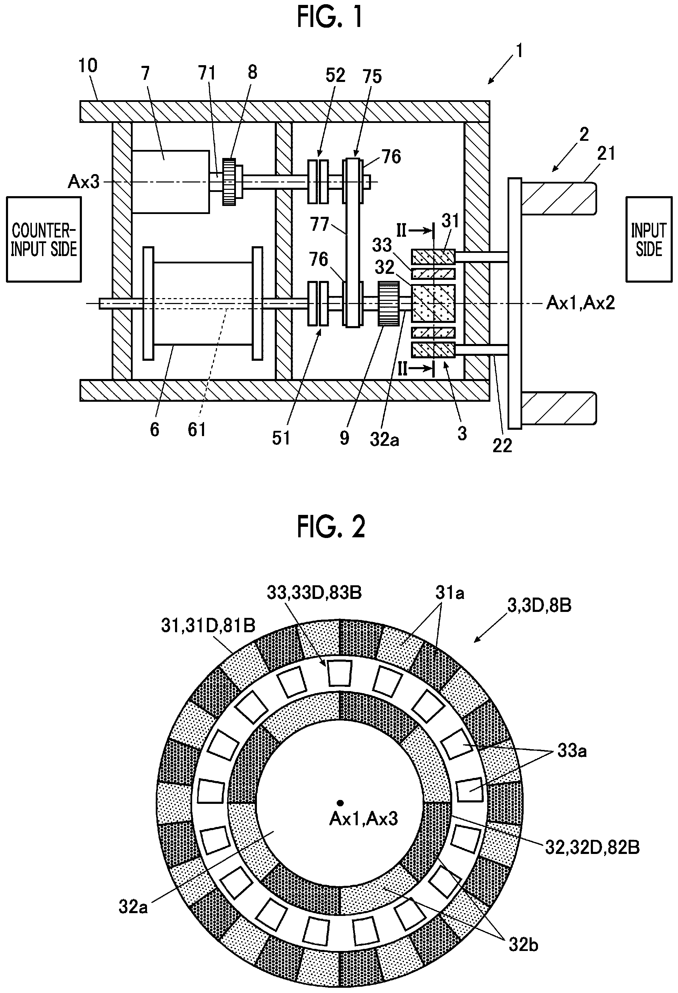

FIG. 1 is a cross-sectional view schematically showing a reel device 1 according to a first embodiment.

As shown in this figure, the reel device 1 according to the first embodiment is a bait reel for fishing and is an electric reel capable of electrically winding a fishing line by a motor. Specifically, the reel device 1 includes a handle 2 to which a rotation force is input by a user, a manual shaft gear 3 that changes the speed of the rotation force input to the handle 2, a spool 6 around which the fishing line is wound, a motor 7, an electric shaft gear 8 that changes the speed of the rotation force generated by the motor 7, and an adjustment gear 9. The handle 2, the manual shaft gear 3, the spool 6, the motor 7, the electric shaft gear 8, the adjustment gear 9, and the like are supported by a frame (body) 10.

### [1-2 Handle]

The handle 2 includes a grip 21 that is gripped by the user, and an arm 22 that includes one end provided with the grip 21 and the other end connected to the manual shaft gear 3. The arm 22 is supported by the frame 10 to be rotatable around a first center axis Ax1, via a one-way clutch (not shown). The one-way clutch rotates the handle 2 only in one direction corresponding to a direction in which the spool 6 winds the fishing line.

In the following description, a direction along the center axis is referred to as an "axial direction", a direction perpendicular to the center axis is referred to as a "radial direction", and a rotation direction centered on the center axis is referred to as a "circumferential direction". The "center axis" is a center axis in each component and is one of the first center axis Ax1 to a third center axis Ax3. In addition, in the axial direction, a side (right side in FIG. 1) on which the handle 2 is disposed is referred to as an "input side", and an opposite side (left side in FIG. 1) to the input side is referred to as a "counter-input side".

### [1-3 Spool]

The spool 6 is a line winding portion that is formed in a substantially cylindrical shape along the axial direction and where the fishing line (line) is wound around an outer peripheral surface thereof. The spool 6 is supported by the frame 10 to be rotatable around a second center axis Ax2 coaxial with the first center axis Ax1, via a spool shaft 61 that is integrally formed, and the spool 6 winds and unwinds the fishing line through the rotation.

A brake that applies a braking force to the spool 6 may be provided on the spool 6. The brake applies a braking force corresponding to a rotational speed of the spool 6 to the spool 6 to suppress backlash or stabilize the cast. As such a brake, for example, techniques known in the conventional art, such as a centrifugal brake or a magnetic brake, can be applied.

### [1-4 Manual Shaft Gear (Second Speed Change Mechanism)]

FIG. 2 is a diagram illustrating a schematic structure of the manual shaft gear 3 and is a cross-sectional view of the manual shaft gear 3 (magnetic modulation gear) taken along line II-II of FIG. 1.

As shown in FIGS. 1 and 2, the manual shaft gear 3 is an example of a second speed change mechanism according to the present invention, is disposed between the handle 2 and the spool 6, and is capable of transmitting the rotation force input to the handle 2 to the spool 6 by changing a speed. The manual shaft gear 3 of the present embodiment is a magnetic modulation gear and includes an outer pole member 31, an inner pole member 32, and a magnetic pole piece member 33.

The outer pole member 31 is an input shaft in the present embodiment, the arm 22 of the handle 2 is connected to an end portion of the outer pole member 31 on the input side in the axial direction, and the rotation force is input from the handle 2 to the outer pole member 31. The outer pole member 31 is formed in a substantially cylindrical shape centered on the first center axis Ax1 and includes outer pole magnets 31a. The outer pole magnets 31a are, for example, permanent magnets such as neodymium magnets, and a plurality of magnets having different polarities are alternately disposed in the circumferential direction.

The outer pole member 31 may include a yoke or the like that supports the outer pole magnets 31a. In addition, the outer pole magnets 31a may have an integral ring shape or may have a shape in which divided outer pole magnets are arranged in the circumferential direction.

The inner pole member 32 is an output shaft in the present embodiment, and the spool 6 is connected to the counter-input side of the inner pole member 32. The inner pole member 32 is concentrically disposed on an inner diameter side of the outer pole member 31 and includes a shaft 32a and inner pole magnets 32b. The shaft 32a is supported to be rotatable around the first center axis Ax1. The inner pole magnets 32b are, for example, permanent magnets such as neodymium magnets, have a smaller number of poles than that of the outer pole magnets 31a of the outer pole member 31, and are attached to an outer peripheral surface of the shaft 32a such that a plurality of magnets having different polarities are alternately disposed in the circumferential direction. The inner pole magnets 32b may have an integral ring shape or may have a shape in which divided inner pole magnets are arranged in the circumferential direction, or the like.

The shaft 32a is coaxially connected to a spool shaft 61 of the spool 6 via a first clutch 51. The first clutch 51 switches between a connected state in which a rotation force is transmitted and a separated state in which the rotation force is not transmitted, by operating a clutch lever (not shown), between the shaft 32a and the spool shaft 61.

The magnetic pole piece member 33 is formed in a substantially cylindrical shape and is disposed concentrically with the outer pole member 31 and the inner pole member 32 at a radial position between the outer pole member 31 and the inner pole member 32. An end portion of the magnetic pole piece member 33 in the axial direction is fixed to the frame (body) 10. The magnetic pole piece member 33 includes magnetic pole pieces (pole pieces) 33a disposed on an outer diameter side of the inner pole magnets 32b.

The magnetic pole pieces 33a are formed of laminated steel sheets, and a plurality of magnetic pole pieces are disposed at predetermined intervals in the circumferential direction. The number of the magnetic pole pieces 33a is the number of outer magnetic pole pairs (the number of pole pairs of the outer pole magnets 31a) ± the number of inner magnetic pole pairs (the number of pole pairs of the inner pole magnets 32b) and is typically the number of outer magnetic pole pairs + the number of inner magnetic pole pairs. Two magnetic pole pieces 33a adjacent to each other in the circumferential direction may be connected by a thin connecting portion, may be connected by a non-magnetic body, or may not be connected. FIG. 2 shows an example in which two magnetic pole pieces 33a adjacent to each other are not connected. In addition, the magnetic pole piece 33a need not be formed of a laminated steel sheet as long as it is a magnetic body, and may be a block of a steel material (an SS material, an SPCC material, or the like) as long as it is simply operated.

In the manual shaft gear 3 having the above configuration, when rotation is input to the outer pole member 31, the spatial magnetic flux waveform of the outer pole magnets 31a of the outer pole member 31 is modulated to the same frequency as the inner pole magnets 32b of the inner pole member 32 by the magnetic pole pieces 33a of the magnetic pole piece member 33, and the torque is transmitted to the inner pole member 32 by using a magnetic force between the magnetic pole pieces 33a and the inner pole magnets 32b. That is, in the manual shaft gear 3, power transmission is performed from the outer pole member 31 to the inner pole member 32 by the modulated magnetic flux. In this case, a gear ratio is the number of outer pole pairs/ the number of inner pole pairs (the rotations are in opposite directions).

The manual shaft gear 3 (magnetic modulation gear) can function as, for example, a differential gear that uses the magnetic pole piece member as a differential shaft and absorbs a difference between two rotation inputs to output one rotation.

### [1-5 Motor]

As shown in FIG. 1, the motor 7 is disposed at the same axial position as the spool 6, and outputs a rotation force to a motor shaft 71 along the third center axis Ax3 parallel to the first center axis Ax1. The motor shaft 71 is connected to the shaft 32a of the manual shaft gear 3 via a connection mechanism 75.

The connection mechanism 75 transmits the rotation force generated by the motor 7 to the spool 6. The connection mechanism 75 of the present embodiment includes two pulleys 76 fixed on two shafts for transmitting the rotation force, and a belt 77 stretched over the two pulleys 76. However, the connection mechanism 75 may not be a belt transmission mechanism as long as it can transmit the rotation force, and may be, for example, a gear mechanism including meshing spur gears.

### [1-6 Electric Shaft Gear (First Speed Change Mechanism)]

The electric shaft gear 8 is an example of a first speed change mechanism according to the present invention, is disposed between the motor 7 and the connection mechanism 75, and is capable of transmitting the rotation force generated by the motor 7 to the spool 6 by changing a speed. The electric shaft gear 8 of the present embodiment is a planetary gear mechanism. However, the electric shaft gear 8 may be a mechanical speed change mechanism other than the planetary gear mechanism.

The electric shaft gear 8 is connected to the connection mechanism 75 via a second clutch 52. The second clutch 52 switches between a connected state in which a rotation force is transmitted and a separated state in which the rotation force is not transmitted, by operating a clutch lever (not shown), between the electric shaft gear 8 (by extension, motor 7) and the connection mechanism 75.

### [1-7 Adjustment Gear (Differential Gear)]

The adjustment gear 9 is a differential gear (differential speed change mechanism) that absorbs a difference between rotation outputs of the manual shaft gear 3 and the electric shaft gear 8. The adjustment gear 9 of the present embodiment is a planetary gear mechanism. However, the adjustment gear 9 may be a differential speed change mechanism other than the planetary gear mechanism.

### [1-8 Operation of Reel Device]

### · During Manual Winding

In the reel device 1, when the fishing line (line) is manually wound, the user sets the first clutch 51 to the connected state and the second clutch 52 to the separated state by a predetermined lever operation or the like. In this state, when the user manually rotates the handle 2, the outer pole member 31 of the manual shaft gear 3 connected to the handle 2 also rotates in the same direction. When the outer pole member 31 rotates, a rotation torque (rotation force) is transmitted to the inner pole member 32 while the spatial magnetic flux waveform of the outer pole magnets 31a is modulated by the magnetic pole pieces 33a of the magnetic pole piece member 33 (the rotations are in opposite directions). In this case, the gear ratio is the number of outer pole pairs/ the number of inner pole pairs, resulting in an increase in speed in the present embodiment. Then, the spool 6 connected to the inner pole member 32 via the first clutch 51 also rotates in the same direction as the inner pole member 32, and the fishing line is wound at an increased rotation.

In this case, in a case where the fishing line is forcibly pulled out from the spool 6 because of a strong pull of a fish or the like, the spool 6 rotates in an opposite direction to that during line winding, and the inner pole member 32 connected to the spool 6 also rotates in the same direction. The outer pole member 31 also attempts to rotate in the opposite direction to that during line winding with the rotation of the inner pole member 32, but the handle 2 is restrained from rotating by, for example, the one-way clutch, and the outer pole member 31 connected to the handle 2 also cannot rotate. As a result, the inner pole member 32 is out of step and rotates independently of the outer pole member 31, and the drag is started. In this way, the fishing line is pulled out from the spool 6, and the drag is performed.

At least one of the magnetic pole piece member 33, the outer pole member 31, and the inner pole member 32 may be configured to be movable in the axial direction to adjust the step-out torque, by extension, the drag force (tension of the fishing line when the drag is generated). In terms of generating a larger torque change with a smaller amount of movement, it is more preferable to move the magnetic pole piece member 33.

### · During Electric Winding

When the fishing line is wound by the motor 7, the user sets both the first clutch 51 and the second clutch 52 to the connected state by a predetermined lever operation or the like. In this state, for example, when the motor 7 is driven by a predetermined lever operation or the like, the rotation force output from the motor 7 is reduced in speed, for example, through the electric shaft gear 8 and the spool 6 is rotated via the connection mechanism 75. As a result, the fishing line is wound at the changed-speed rotation.

The difference between the rotation force (rotation speed) input from the motor 7 to the spool shaft 61 through the connection mechanism 75 and the rotation force of the inner pole member 32 of the manual shaft gear 3 is absorbed by the adjustment gear 9.

### · During Line Releasing

When the fishing line is released from the spool 6, the user sets both the first clutch 51 and the second clutch 52 to the separated state by a predetermined lever operation or the like. As a result, the spool 6 rotates in an opposite direction to that during line winding as the fishing line is pulled out, for example, and the fishing line is released.

The release of the fishing line is performed in the same manner as in the present embodiment in each of the following embodiments.

### [1-9 Technical Effects of Present Embodiment]

As described above, according to the first embodiment, the rotation force input to the handle 2 by a manual operation of the user is transmitted to the spool 6 by changing a speed through magnetic modulation in the manual shaft gear 3.

Consequently, power (torque) can be transmitted from the handle 2 to the spool 6 in a non-contact manner. Therefore, power loss at a contact portion that has occurred in a mechanical (contact-type) torque transmission mechanism, the mechanical sound (gear meshing sound), and a change in characteristics due to a contact state can be suppressed. In addition, the amount of maintenance that has been conventionally required in order to suppress these issues can also be significantly reduced.

In addition, drag (obtaining torque limit effect) can be performed by the step-out between the outer pole member 31 connected to the handle 2 and the inner pole member 32 connected to the spool 6. Consequently, it is possible to suppress a change in the drag force as compared with the friction-type drag.

In general, factors causing the fluctuation of the drag force include, in addition to aging change and the environmental dependence, the rotational speed of the spool 6, the frictional heat caused by the continuous pulling out of the fishing line, and the like. In addition, the bait reel is considered to have a structure in which the position of the drag is far from the spool shaft, and the drag operation performance is lower than that of a spinning reel. In this regard, according to the present embodiment, the drag can suitably function by the step-out between the outer pole member 31 and the inner pole member 32.

### <2. Second Embodiment>

### [2-1 Configuration of Reel Device]

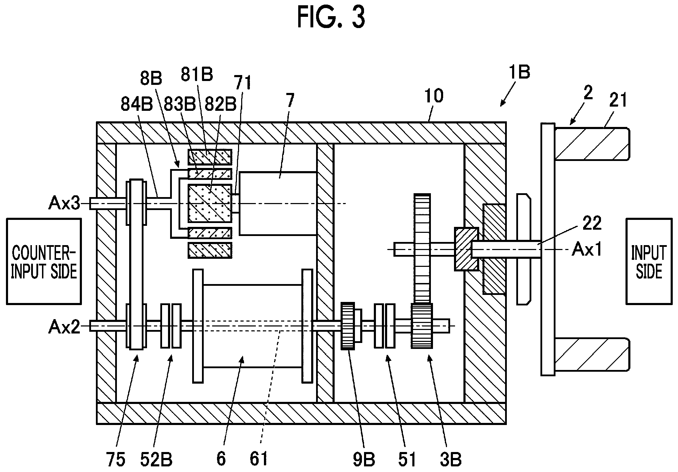

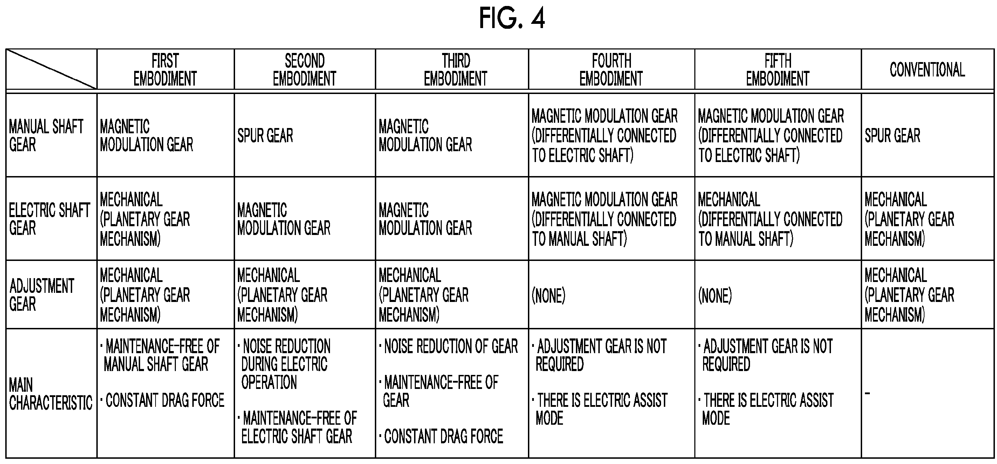

FIG. 3 is a cross-sectional view schematically showing a reel device 1B according to a second embodiment, and FIG. 4 is a view showing a basic configuration and characteristics of each embodiment.

In the following embodiments, the same reference numerals will be assigned to components the same as those in the above-described embodiment, and description thereof will be omitted. In addition, in the following description, the reference numerals of the components in the second to fifth embodiments may be followed by capital letters "B" to "E" to identify them.

As shown in FIGS. 3 and 4, the reel device 1B according to the second embodiment is different from the reel device 1 according to the first embodiment mainly in that a manual shaft gear 3B is a gear mechanism using a spur gear and an electric shaft gear 8B is a magnetic modulation gear.

The manual shaft gear 3B is a gear mechanism including a plurality of externally meshing spur gears, and transmits the rotation force input to the handle 2 to the spool 6 side at a predetermined gear ratio.

The electric shaft gear 8B is a magnetic modulation gear similar to the manual shaft gear 3 in the first embodiment, and includes an outer pole member 81B, an inner pole member 82B, and a magnetic pole piece member 83B (see FIG. 2). These have the same basic structure as the outer pole member 31, the inner pole member 32, and the magnetic pole piece member 33 in the manual shaft gear 3 of the first embodiment.

The outer pole member 81B is fixed to the frame 10.

The inner pole member 82B is connected to the motor shaft 71, and the rotation force is input from the motor shaft 71.

An output shaft 84B is fixed to the magnetic pole piece member 83B. The output shaft 84B is connected to the spool shaft 61 of the spool 6 via the connection mechanism 75.

The connection mechanism 75 is connected to the spool 6 via a second clutch 52B. The second clutch 52B switches between a connected state in which a rotation force is transmitted and a separated state in which the rotation force is not transmitted, by operating a clutch lever (not shown), between the connection mechanism 75 (by extension, motor 7) and the spool 6.

In the electric shaft gear 8B, the magnetic pole piece member 83B may be fixed to the frame 10, and the outer pole member 81B may be connected to the output shaft 84B.

In addition, an adjustment gear 9B of the present embodiment is disposed between the first clutch 51 and the spool 6. The adjustment gear 9B absorbs a difference between the rotation force (rotation speed) input from the handle 2 via the manual shaft gear 3B and the rotation force input from the motor 7 via the electric shaft gear 8B, and matches them. The adjustment gear 9B of the present embodiment is a planetary gear mechanism. However, the adjustment gear 9B may be a mechanical speed change mechanism other than the planetary gear mechanism.

### [2-2 Operation of Reel Device]

### · During Manual Winding

In the reel device 1B, when the fishing line (line) is manually wound, the user sets the first clutch 51 to the connected state and the second clutch 52 to the separated state by a predetermined lever operation or the like. In this state, when the user rotates the handle 2, the rotation is increased in speed, for example, by the manual shaft gear 3B connected to the handle 2. Then, the spool 6 connected to the manual shaft gear 3B via the first clutch 51 rotates, and the fishing line is wound at an increased rotation.

### · During Electric Winding

When the fishing line is wound by the motor 7, the user sets both the first clutch 51 and the second clutch 52 to the connected state by a predetermined lever operation or the like. In this state, when the motor 7 is driven, the inner pole member 82B of the electric shaft gear 8B connected to the motor shaft 71 also rotates in the same direction. When the inner pole member 82B rotates, the spatial magnetic flux waveform of the inner pole magnets thereof is modulated by the magnetic pole piece member 83B, and becomes a magnetic flux density waveform equal to that of the outer pole member 81B. As a result, the reduced torque is transmitted to the magnetic pole piece member 83B. Then, the spool 6 connected to the magnetic pole piece member 83B via the connection mechanism 75 and the second clutch 52B also rotates in the same manner, and the fishing line is wound at a changed-speed rotation.

In this case, the difference between the rotation force (rotation speed) input from the motor 7 to the spool shaft 61 through the connection mechanism 75 and the rotation force of the inner pole member 32 of the manual shaft gear 3 is absorbed by the adjustment gear 9.

### [2-3 Technical Effects of Present Embodiment]

As described above, according to the second embodiment, the electric shaft gear 8B transmits the rotation force generated by the motor 7 to the spool 6 by changing a speed through magnetic modulation.

Consequently, power (torque) can be transmitted from the motor 7 to the spool 6 in a non-contact manner. Therefore, power loss at a contact portion that has occurred in a mechanical (contact-type) torque transmission mechanism, the mechanical sound (gear meshing sound), and a change in characteristics due to a contact state can be suppressed. In addition, the amount of maintenance that has been conventionally required in order to suppress these issues can also be significantly reduced. Therefore, it is possible to provide the electric reel having excellent quietness and excellent maintainability.

### <3. Third Embodiment>

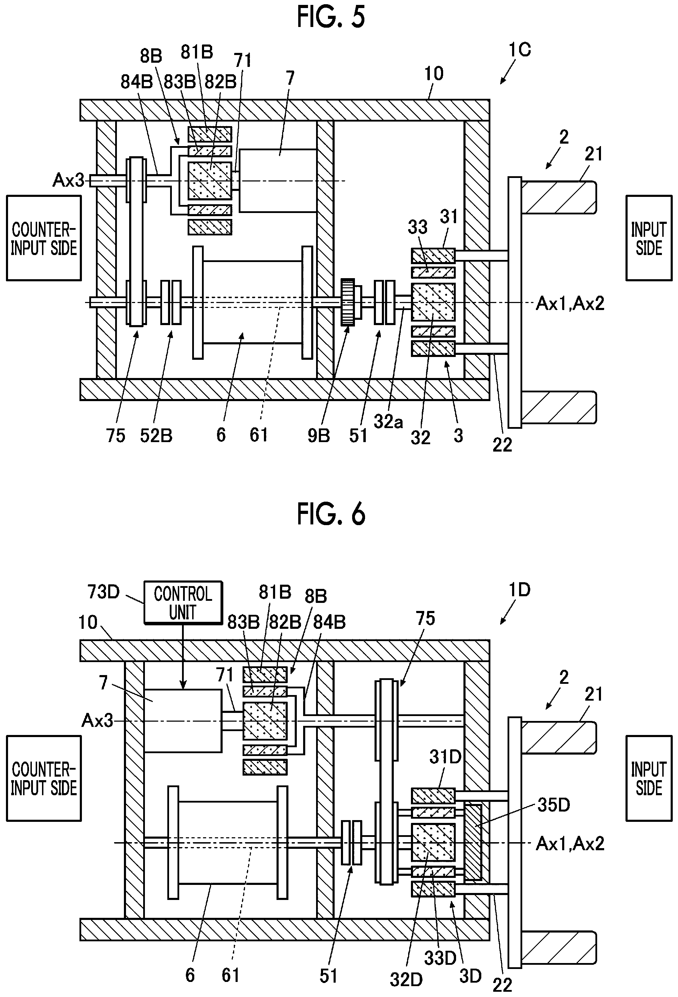

FIG. 5 is a cross-sectional view schematically showing a reel device 1C according to a third embodiment.

As shown in FIGS. 4 and 5, in the reel device 1C according to the third embodiment, both a manual shaft gear and an electric shaft gear are magnetic modulation gears.

Specifically, the reel device 1C includes the same manual shaft gear 3 as in the first embodiment and the same electric shaft gear 8B as in the second embodiment. Even during operation, the manual shaft gear 3 functions in the same manner as in the above-described embodiments during manual winding, and the electric shaft gear 8B functions in the same manner as in the above-described embodiments during electric winding.

Even with such a reel device 1C, the same effects as those of the first embodiment and the second embodiment can be obtained.

That is, by using the manual shaft gear 3 and the electric shaft gear 8B as magnetic modulation gears, the quietness and the maintainability thereof can be improved. In addition, it is possible to suppress a change in the drag force as compared with the friction-type drag.

### <4. Fourth Embodiment>

### [4-1 Configuration of Reel Device]

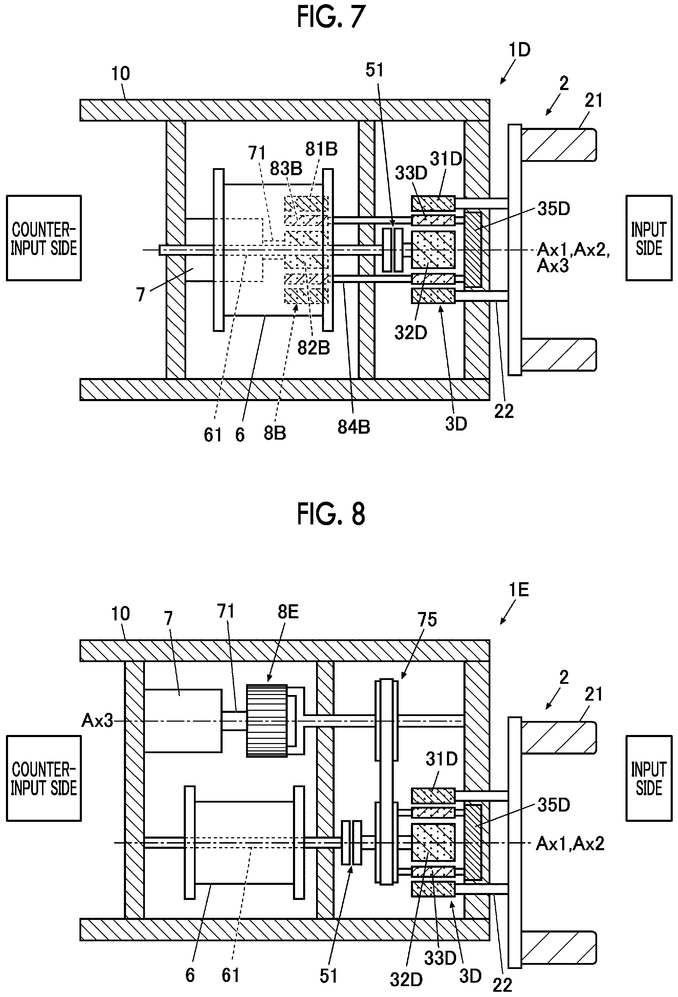

FIG. 6 is a cross-sectional view schematically showing a reel device 1D according to a fourth embodiment. FIG. 7 is a cross-sectional view schematically showing the reel device 1D according to a modification example of the fourth embodiment.

As shown in FIGS. 4 and 6, in the reel device 1D according to the fourth embodiment, the manual shaft gear and the electric shaft gear are differentially connected to each other such that the motor 7 can assist (support) the manual winding.

Specifically, the reel device 1D includes a manual shaft gear 3D instead of the manual shaft gear 3 in the first embodiment, and includes the same electric shaft gear 8B as in the second embodiment.

The manual shaft gear 3D is the same magnetic modulation gear as the manual shaft gear 3 in the first embodiment (see FIG. 2), but a magnetic pole piece member 33D is not fixed to the frame 10 and is connected to the electric shaft gear 8B. More specifically, the magnetic pole piece member 33D is connected to the output shaft 84B of the electric shaft gear 8B via the connection mechanism 75. In addition, the magnetic pole piece member 33D is connected to a one-way clutch 35D. The one-way clutch 35D rotates the magnetic pole piece member 33D only in one direction in which the gear ratio of the manual shaft gear 3D is increased (further increased in speed).

As in the first embodiment, in the inner pole member 32, the shaft 32a is connected to the spool 6 via the first clutch 51. In FIG. 6, for convenience of illustration, the shaft 32a intersects the connection mechanism 75, but in reality, these do not interfere with each other.

In addition, the reel device 1D includes a measurement unit (not shown) that measures the input torque input from the handle 2, and a control unit 73D such as a microcomputer. The measurement unit may be a torque sensor, a speed sensor, or a position sensor. The control unit 73D controls the operation of the motor 7 based on the input torque measured by the measurement unit, and performs ON/OFF switching, output adjustment, and the like of the motor 7. As a result, the operation of the motor 7 is suitably controlled regardless of the operation of the user.

In addition, in the reel device 1D, as described above, the manual shaft gear 3D and the electric shaft gear 8B are differentially connected to each other, and the difference in rotation forces therebetween can be absorbed. Therefore, an adjustment gear that performs the same function is not required.

### [4-2 Operation of Reel Device]

### · During Manual Winding

In the reel device 1D, when the fishing line (line) is manually wound, the rotation force applied to the handle 2 by the user is increased in speed by the manual shaft gear 3D, for example, in the same manner as in the first embodiment. Then, the spool 6 connected to the manual shaft gear 3D via the first clutch 51 rotates, and the fishing line is wound at an increased rotation. In this case, the magnetic pole piece member 33D of the manual shaft gear 3D is restrained by the one-way clutch 35D and does not rotate.

In this case, a second clutch that disconnects the manual shaft gear 3D and the electric shaft gear 8B may be provided therebetween.

### · During Electric Assistance

During manual winding, the manual torque input from the handle 2 is measured by the measurement unit. When the measured torque value exceeds, for example, a threshold set in advance, the control unit 73D drives the motor 7. As in the second embodiment, the output of the motor 7 is reduced in speed via the electric shaft gear 8B. This rotation force is transmitted to the magnetic pole piece member 33D via the connection mechanism 75, and rotates the magnetic pole piece member 33D in a direction opposite to a manual shaft 31D.

As a result, the relative rotation between the magnetic pole piece member 33D and the outer pole member 31D is increased, and the shaft torque of the handle 2 connected to the outer pole member 31D is reduced.

### · During Electric Winding

When the fishing line is wound by only the motor 7, the user sets the first clutch 51 to the connected state by a predetermined lever operation or the like. In this state, when the motor 7 is driven without operating the handle 2, as in the second embodiment, the output of the motor 7 is reduced in speed via the electric shaft gear 8B. This rotation force rotates the magnetic pole piece member 33D of the manual shaft gear 3D via the connection mechanism 75. When the magnetic pole piece member 33D rotates, the rotation torque is increased in speed and transmitted to the inner pole member 32D while the spatial magnetic flux waveform of the magnetic pole piece 33a is modulated by the outer pole member 31D. Then, the spool 6 connected to the inner pole member 32D via the first clutch 51 also rotates in the same direction as the inner pole member 32D, and the fishing line is wound at a changed-speed rotation.

### [4-3 Technical Effects of Present Embodiment]

As described above, according to the fourth embodiment, the manual shaft gear 3D is a differential gear, and the output shaft 84B of the electric shaft gear 8B is connected to the magnetic pole piece member 33D (differential shaft) of the manual shaft gear 3D.

As a result, the manual input from the handle 2 can be suitably assisted by the power of the motor 7. That is, in the conventional electric reel, the main purpose of use of the motor is electric winding by only the power of the motor. However, in the reel device 1D of the present embodiment, it is possible to use the electric assist mode in which the manual input from the handle 2 is assisted by the power of the motor 7.

In addition, the manual shaft gear 3D and the electric shaft gear 8B are differentially connected to each other, and the difference in rotation forces therebetween is absorbed. Therefore, an adjustment gear that performs the same function can be made unnecessary.

In addition, according to the fourth embodiment, the input torque input from the handle 2 is measured by the measurement unit, and the operation of the motor 7 is controlled based on the measured input torque.

As a result, the user can suitably control the operation of the motor 7. That is, in the conventional electric reel, the user manually adjusts the speed by lever operation, and thus it is difficult to finely adjust the speed, and a problem such as the line being unexpectedly cut occurs. In this regard, in the present embodiment, the user can intuitively adjust the assist force by the handle operation without depending on the lever operation.

Further, since the operation of the motor 7 can be controlled without depending on the operation of the user, the operation lever for motor drive (refer to FIGS. 9A and 9B) provided in the conventional electric reel is not required. As a result, the reel device 1D can be configured to be simpler and more compact.

In the reel device 1D, as shown in FIG. 7, the manual shaft gear 3D, the motor 7, and the electric shaft gear 8B may be disposed coaxially.

In this case, the motor 7 and the electric shaft gear 8B may be disposed inside the spool 6 (or on the counter-input side of the spool 6), and may be connected to the manual shaft gear 3D or fixed to the frame 10 without interfering with the spool 6. As a result, the motor 7, the spool 6, the electric shaft gear 8B, the handle 2, and the manual shaft gear 3D are disposed in a state where the rotation center axes (Ax1, Ax2, and Ax3) are located on the same straight line. Therefore, the reel device 1D can be configured to be compact.

In addition, in this case, the magnetic pole piece member 33D of the manual shaft gear 3D may be directly connected to the magnetic pole piece member 83B of the electric shaft gear 8B. As a result, the connection mechanism 75 can be made unnecessary.

### <5. Fifth Embodiment>

FIG. 8 is a cross-sectional view schematically showing a reel device 1E according to a fifth embodiment.

As shown in FIGS. 4 and 8, the reel device 1E according to the fifth embodiment is different from the fourth embodiment in that an electric shaft gear 8E is a mechanical speed change mechanism instead of a magnetic modulation gear. The electric shaft gear 8E is, for example, a planetary gear mechanism, but is not particularly limited, and may not be a differential gear.

Even with such a reel device 1E, as in the fourth embodiment, the manual input from the handle 2 can be suitably assisted by the power of the motor 7.

### <Others>

Hitherto, the embodiment of the present invention has been described. However, the present invention is not limited to the above-described embodiment.

For example, in the above-described embodiments and modification examples, the reel device for fishing has been described as an example. However, the reel device according to the present invention is not limited to fishing purposes and can be widely applied to all the reel devices that wind and unwind a line-like body. The line-like body to be wound around the reel device is not limited to the fishing line and widely includes line-like bodies such as a wire.

In addition, the reel device according to the present invention is also applicable to an electric reel.

Furthermore, it is preferable that each portion (particularly, a magnet or a magnetic pole piece of each portion) of the reel device 1 is subjected to a water-resistant coating for suppressing corrosion caused by water (particularly, seawater).

In addition, the details of the above-described embodiment can be appropriately changed without departing from the gist of the present invention.

### Industrial Applicability

As described above, the present invention is useful for providing the electric reel having excellent quietness and excellent maintainability.

### Reference Signs List

1, 1B, 1C, 1D, 1E reel device
2 handle (rotation input portion)
3, 3B, 3D manual shaft gear (second speed change mechanism)
31, 31D outer pole member
32, 32D inner pole member
33, 33D magnetic pole piece member
6 spool (line winding portion)
7 motor
73D control unit
8, 8B, 8E electric shaft gear (first speed change mechanism)
81B outer pole member
82B inner pole member
83B magnetic pole piece member
84B output shaft
9, 9B adjustment gear (differential gear)
10 frame (casing)
51 first clutch
52, 52B second clutch
75 connection mechanism
Ax1 first center axis
Ax2 second center axis
Ax3 third center axis

## Claims

1. A reel device comprising:
a motor;
a line winding portion that is rotatably supported and around which a line-like body is wound; and
a first speed change mechanism that is capable of transmitting a rotation force generated by the motor to the line winding portion by changing a speed through magnetic modulation.

2. The reel device according to claim 1, further comprising:
a rotation input portion to which a rotation force generated by a manual operation of a user is input; and
a second speed change mechanism that is capable of transmitting the rotation force input to the rotation input portion to the line winding portion by changing a speed through magnetic modulation.

3. The reel device according to claim 2, further comprising:
a differential gear that absorbs a difference between rotation outputs of the first speed change mechanism and the second speed change mechanism.

4. The reel device according to claim 2,
wherein each of the first speed change mechanism and the second speed change mechanism includes
a magnetic pole piece member that includes a plurality of magnetic pole pieces arranged in a circumferential direction,
an outer pole member that is disposed on an outer diameter side of the magnetic pole piece member and includes a plurality of outer pole magnets arranged in the circumferential direction, and
an inner pole member that is disposed on an inner diameter side of the magnetic pole piece member and includes a plurality of inner pole magnets arranged in the circumferential direction,
in the first speed change mechanism,
the inner pole member is connected to the motor, and
one of the outer pole member and the magnetic pole piece member is fixed to a casing, and
in the second speed change mechanism,
the outer pole member is connected to the rotation input portion,
the magnetic pole piece member is connected to the other of the outer pole member and the magnetic pole piece member in the first speed change mechanism, and
the inner pole member is connected to the line winding portion.

5. The reel device according to claim 4,
wherein the motor, the line winding portion, the first speed change mechanism, the rotation input portion, and the second speed change mechanism have rotation center axes located on the same straight line.

6. A reel device comprising:
a motor;
a line winding portion that is rotatably supported and around which a line-like body is wound;
a first speed change mechanism that is capable of transmitting a rotation force generated by the motor to the line winding portion by changing a speed;
a rotation input portion to which a rotation force generated by a manual operation of a user is input; and
a second speed change mechanism that is capable of transmitting the rotation force input to the rotation input portion to the line winding portion by changing a speed,
wherein the second speed change mechanism is a differential gear, and
an output shaft of the first speed change mechanism is connected to a differential shaft of the second speed change mechanism.

7. The reel device according to claim 6, further comprising:
a measurement unit that measures an input torque input from the rotation input portion; and
a control unit that controls an operation of the motor based on the input torque measured by the measurement unit.

8. The reel device according to claim 7,
wherein an operation unit that controls driving of the motor based on a user operation is not provided.
